# EUROPÄISCHE PATENTSCHRIFT

(11) **EP 1 979 636 B1**
(45) Veröffentlichungstag und Bekanntmachung des Hinweises auf die Patenterteilung: **16.12.2009**
(21) Anmeldenummer: 06819966.0
(22) Anmeldetag: 19.12.2006
(51) Int. Cl.: F16C 13/00, F16H 55/44

(54) **LAUFSCHEIBE MIT INTEGRIERTER WÄLZKÖRPERLAUFBAHN**
RUNNER PLATE WITH INTEGRATED ROLLING BODY RACEWAY
DISQUE MOBILE AVEC PISTE DE ROULEMENT INTÉGRÉE POUR ÉLÉMENTS DE ROULEMENT

(30) Priorität: 21.01.2006 DE 102006002966
(43) Veröffentlichungstag der Anmeldung: 15.10.2008
(73) Patentinhaber: Schaeffler KG, 91074 Herzogenaurach (DE)
(72) Erfinder: SCHENK, Rainer, 90587 Tuchenbach (DE); BOGNER, Michael, 90542 Eckental (DE)
(86) Internationale Anmeldenummer: PCT/EP2006/069884
(87) Internationale Veröffentlichungsnummer: WO 2007/082618

(56) Entgegenhaltungen:
- DE-A1- 2 203 681
- DE-A1- 2 531 699
- DE-A1- 4 404 193
- DE-U1-202005 011 230
- US-A- 3 833 278

## Beschreibung

### Gebiet der Erfindung

Die Erfindung betrifft eine Laufscheibe für einen Zugmitteltrieb mit einem C-förmig gestalteten Querschnittsprofil. Die einteilig ausgeführte, als Spanlosteil konzipierte Laufscheibe, ist im Einbauzustand über eine Mantelfläche mit einem Zugmittel verbunden. Die Nabe der Laufscheibe steht mittelbar oder unmittelbar mit einem Wälzlager in Verbindung.

### Hintergrund der Erfindung

Bekannte Laufscheiben sind mit herkömmlichen Wälzlagerungen drehbar gelagert, wobei beispielsweise ein Außenring mittels einer Presspassung in die Nabe der tiefgezogenen Laufscheibe eingepresst wird. Diese Bauart erfordert hohe Herstellkosten, eine aufwändige Montage und umfasst eine nachteilig großen Bauteileumfang, verbunden mit einem relativ hohen Gewicht. Zusätzlich hat der Pressverband zwischen dem Wälzlager und der Laufscheibennabe negativen Einfluss auf das Radialspiel des eingepressten Wälzlagers. Weiterhin besteht die Gefahr, dass bei einem Zusammentreffen von Fertigungstoleranzen ein selbstständiges Abwandern bzw. Lösen der Laufscheibe von dem Wälzlagerring eintreten kann.

In dem Dokument US 38 33 278 A ist eine spanlos geformte Laufscheibe offenbart, deren Nabe an einem Innenring eines Wälzlagers positioniert ist, wobei der Wälzlager-Außenring in einem ortsfesten Gehäuse lagefixiert ist. Der Nachteil dieses Konzepts besteht darin, dass zur Lagerung der Laufscheibe ein Wälzlager mit einem Innen- und einem Außenring erforderlich ist. Dadurch wird die Herstellung der Laufscheibe erschwert, da einerseits die Lagerringe zu fertigen und zu montieren sind, wobei aufgrund der aufwändigen Querschnittsform der Laufscheibennabe eine Fixierung des Innenrings über einen Bord erforderlich ist, was die Herstellkosten der Laufscheibe entsprechend erhöht.

Eine weitere, einen zweiteiligen Aufbau einschließende Laufscheibe ist aus der DE 2 203 681 A1 bekannt. Ein sogenannter Riemenscheibenkranz ist dabei mit einem speichenförmigen Flansch versehen, wobei die Nabe eingeformte Wälzkörper-Laufbahnen einschließt. Zur Bildung eines Wälzlagers sind die Wälzkörper außenseitig an einem ortsfesten Lagerteil geführt.

Das Dokument DE2531699 A1 offenbart eine Laufscheibe für einen Zugmitteltrieb, ausgeführt als ein einteiliges Spanlosteil, an dessen Mantelfläche ein Zugmittel geführt ist und dessen gleichzeitig einen Wälzlagerring bildende Nabe mit einem Wälzlager zusammenwirkt, wobei in die Nabe der Laufscheibe eine Laufbahn zur Aufnahme und Führung von Wälzkörpern eingeformt ist.

### Aufgabe der Erfindung

Der Erfindung liegt die Aufgabe zugrunde, eine kostengünstige und bauteiloptimierte Laufscheibe zu schaffen. Diese Aufgabe wird durch die Merkmale des Anspruchs 1 erfüllt.

Das erfindungsgemäße Konzept vermeidet die zuvor genannten Nachteile, in dem die einteilige Laufscheibe in einem spanlosen Formgebungsverfahren so hergestellt wird, dass dieses Verfahren gleichzeitig das Einformen einer Laufbahn zur Aufnahme und Führung von Wälzkörpern einschließt. Diese Maßnahme bewirkt für die einteilige Laufscheibe im Betriebszustand eine sichere Lagepositionierung, da die Wälzkörper sozusagen eine formschlüssige Sicherung der Laufscheibe auf dem Wälzlager bewirken. Gleichzeitig verringert sich der Bauteileumfang und das Gewicht der Laufscheibe. Das Herstellverfahren der Laufscheibe kann vorteilhaft so abgestimmt werden, dass sich eine eingeengte Fertigungstoleranz einstellt, wodurch sich eine für die Funktion der Wälzlagerung erforderliche eng eingrenzbare Radialluft einstellt. Dieses Verfahren ist einsetzbar, da nach dem Formgebungsverfahren zur Herstellung der Laufscheibe kein nachfolgender Fügevorgang bzw. Pressvorgang die Radialluft des Wälzlagers beeinflusst.

Weitere vorteilhafte Ausgestaltungen der Erfindung und Gegenstand der abhängigen Ansprüche 2-9.

In vorteilhafter Weise kann die Nabe der einteiligen Laufscheibe so ausgelegt werden, dass diese die Funktion eines Außenrings oder eines Innenrings des Wälzlagers einnimmt. Abhängig von der Umgebungskonstruktion kann somit die Wälzkörperlaufbahn in die Mantelfläche der Nabe oder alternativ im Bereich der Innenwandung der Nabe eingeformt werden.

Als bevorzugtes Formgebungsverfahren zur Herstellung der Laufscheibe ist ein Tiefziehverfahren vorgesehen, mit dem die Laufscheibe aus Stahlblech spanlos herstellbar ist. Alternativ dazu bietet sich ein Fließpressverfahren an, um eine kostengünstige Laufscheibe spanlos herstellen zu können. Unabhängig von dem eingesetzten Verfahren wird die Laufbahn für die Wälzkörper direkt in die Nabe der Laufscheibe eingeformt.

Weiterhin schließt die Erfindung bedarfsabhängig eine Nachbehandlung der Laufbahn ein, wozu unterschiedliche Verfahren einsetzbar sind, um die Reibung zu optimieren und / oder die Geräuschentwicklung zu reduzieren. Zur Nachbehandlung kann die Laufbahn rolliert, kaltgewalzt oder geschmiedet werden. Hierdurch wird eine Ausrichtung der Fasern im Werkstoffgefüge und somit eine Kaltverfestigung erreicht. Diese Maßnahme wirkt sich positiv auf die Belastbarkeit, die Tragzahl des Lagers aus, wodurch die Lebensdauer gesteigert werden kann. Erfindungsgemäß ist die Wälzkörperlaufbahn spanlos in die Nabe der Laufscheibe einzubringen, nachdem diese zuvor partiell gehärtet wurde.

Eine weitere vorteilhafte Ausgestaltung der Erfindung sieht vor, in die Nabe zwei axial beabstandete Laufbahnen für die Wälzkörper einzubringen, zur Darstellung eines zweireihigen Wälzlagers. Damit kann die Tragfähigkeit des Wälzlagers erhöht werden, wodurch sich das erfindungsgemäße Konzept auch für hochbelastete Laufscheiben einsetzbar ist.

Als weitere Maßnahme zur Optimierung der Tragfähigkeit der Wälzlagerung weist die erfindungsgemäße Laufscheibe im Bereich der Nabe eine Wandstärke auf, die eine Wandstärke der üblichen Laufscheibenbereiche übertrifft. Diese Maßnahme sorgt im Bereich der Wälzlagerung für eine bauteilfeste, steife Gestaltung, was insbesondere für Laufscheiben von Vorteil ist, die für hohe Drehzahlen auszulegen sind.

Durch eine gezielte technologische Abstimmung und durch die Verwendung von spezieller Werkstoffe kann eine weitere Optimierung der Tragfähigkeit der Wälzlagerung erfolgen.

Bevorzugt schließt die erfindungsgemäße Laufscheibe im Bereich der Nabe einen zylindrischen Abschnitt ein, der zur Aufnahme eines Dichtrings bestimmt ist. Der ortsfest an der Nabe befestigte und mit der Nabe umlaufende Dichtring ist vorteilhaft so gestaltet, dass sich eine axiale bzw. stirnseitige Abdeckung des Wälzlagers einstellt. Dazu bietet es sich an, den Dichtring mit einer elastischen Dichtlippe zu versehen, die unter Einhaltung eines geringen Spaltmaßes bis an den zugehörigen weiteren Lagerring des Wälzlagers geführt ist oder mit einer geringen Kraft an diesem Lagerring abgestützt ist. Der eingesetzte Dichtring ist vorteilhaft mit einer rechtwinklig abgekanteten Armierung versehen, die kraftschlüssig in oder an der Aufnahme der Nabe der Laufscheibe mittels einer Presspassung befestigt ist. Dabei bietet es sich an, den mit der Nabe in Verbindung stehenden Abschnitt der Armierung zu beschichten oder mit einer Gummierung zu versehen, wodurch ein Schmiermittelaustritt aus dem Wälzlager wirksam unterbunden wird.

### Kurze Beschreibung der Zeichnungen

Ausführungsbeispiel von Laufscheiben zeigen die Figuren, die nachfolgend beschrieben werden.

Es zeigen:
- Figur 1: in einer hälftigen Schnittdarstellung eine Lauf- scheibe, die mit einem separaten Lagerring ein einreihiges Wälz- lager bildet;
- Figur 2: eine ebenfalls im Halbschnitt abgebildete erfindungsgemäße Laufscheibe, die über ein zweireihiges Wälzlager drehbar gelagert ist.

### Ausführliche Beschreibung der Zeichnungen

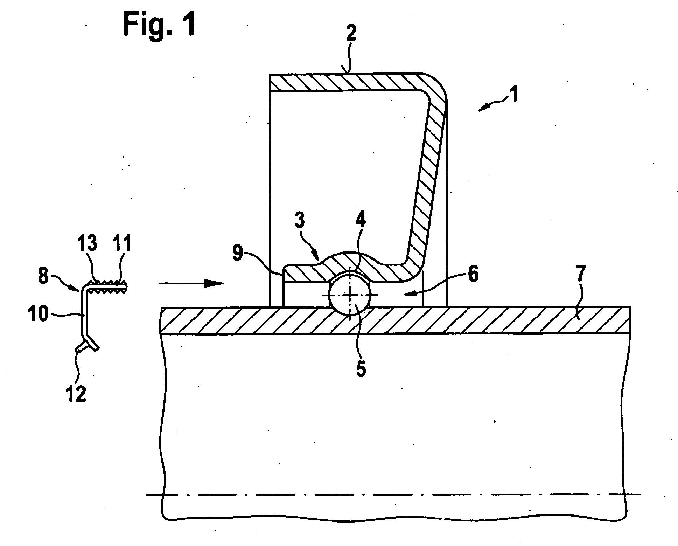

Die im Schnitt dargestellte Laufscheibe 1 gemäß Figur 1 ist mittels eines spanlosen Formgebungsprozesses, insbesondere einem Tiefziehverfahren hergestellt. Die Laufscheibe 1 bildet dabei ein C-förmiges, einseitig offenes Querschnittsprofil. Im Einbauzustand ist an einer Mantelfläche 2 der Laufscheibe 1 ein in Figur 1 nicht abgebildetes Zugmittel, insbesondere ein Riemen geführt. Radial beabstandet zur Mantelfläche 2 bildet die Laufscheibe 1 eine Nabe 3 mit einer gegenüber der Mantelfläche 2 reduzierten Längserstreckung. In die Nabe 3 ist spanlos eine Laufbahn 4 eingeformt, die als Aufnahme und Führung von Wälzkörpern 5 eines Wälzlagers 6 bestimmt ist. Die Nabe 3 übernimmt damit die Funktion eines äußeren Lagerrings des Wälzlagers 6, dem innenseitig ein Innenring 7 zugeordnet ist, welcher beispielsweise auf einer in Figur 1 nicht abgebildeten Welle fixiert ist.

Alternativ dazu bietet es sich an, das Wälzlager 6 ohne separate Lagerringe zu gestalten, wobei die Wälzkörper 5 innenseitig in einer Laufbahn einer Welle geführt sind. Erfindungsgemäß bietet es sich an, die Laufbahn 4 unmittelbar im Zusammenhang mit dem spanlosen Formgebungsprozess der Laufscheibe 1 herzustellen. Zur Optimierung der Laufbahnqualität kann diese rolliert, kaltgewalzt geschmiedet oder geschliffen werden, um beispielsweise eine Ausrichtung der Fasern im Werkstoffgefüge herzustellen, wodurch die Belastbarkeit, die Tragzahl des Lagers gesteigert werden kann. Weiterhin sieht die Erfindung im Bereich der Nabe 4 eine partielle Härtung der Laufscheibe 1 vor, oder ausschließlich im Bereich der Laufbahn 4, was sich ebenfalls vorteilhaft auf die Trägfähigkeit des Wälzlagers 6 auswirkt.

Die Gestaltung der Laufscheibe 1 schließt außerdem Maßnahmen zur gezielten Abdichtung des Wälzlagers 6 ein. Dazu ist ein Dichtring 8 vorgesehen, der an einem zylindrischen Abschnitt 9 der Nabe 3 befestigt ist. Zur einfache Fixierung des Dichtrings 8 ist dieser mit einer Armierung 10 versehen, deren rechtwinklig ausgerichteter Schenkel 11 kraftschlüssig in die Nabe 3 im Bereich des zylindrischen Abschnitts 9 eingepresst wird. Alternativ dazu bietet es sich an, die Armierung 10 so zu gestalten, dass deren Schenkel 11 den zylindrischen Abschnitt 9 außenseitig umschließt. Der in Figur 1 vergrößert dargestellte Dichtring 8 ist im eingebauten Zustand unter Einhaltung eines Spaltmaßes bis an eine Mantelfläche des Innenrings 7 geführt. Alternativ dazu bietet es sich an, dass eine Dichtlippe 12 des Dichtrings 8 mit einer geringen Anlagekraft an dem Innenring 7 abgestützt ist. Weiterhin ist der Schenkel 11 der Armierung 10 mit einer Gummierung 13 oder alternativ mit einer Beschichtung versehen, die im Einbauzustand des Dichtrings 8 eine wirksame Abdichtung zwischen der Nabe 3 und der Armierung 10 sicherstellt. Zur Erzielung eines beidseitig abgedichteten Wälzlagers 6 kann ein weiterer Dichtring 8 auf der vom zylindrischen Abschnitt 9 abgewandten Seite des Wälzlagers 6 in die Nabe 3 eingepresst werden.

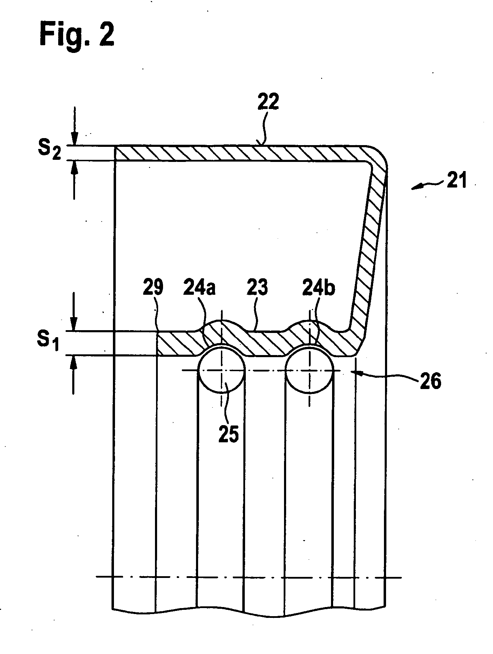

Die Figur 2 zeigt eine erfindungsgemäße aufscheibe 21, die im Vergleich zu der Laufscheibe 1 gemäß Figur 1, eine größere Bauteilbreite aufweist. Das ebenfalls C-förmig gestaltete Querschnittsprofil der Laufscheibe 21 wird radial außenseitig von der Mantelfläche 22 und radial innenseitig von der Nabe 23 begrenzt. Die Nabe 23 ist mit zwei axial versetzt zueinander eingeformten Laufbahnen 24a, 24b für die Wälzkörper 25 des Wälzlagers 26 versehen. Das zur Herstellung der Laufscheibe 21 vorgesehene spanlose Herstellverfahren schließt ebenfalls das Einformen der Laufbahnen 24a, 24b ein. Zur Erzielung einer größeren Steifigkeit der Laufscheibe 21, die gleichzeitig die Tragfähigkeit des Wälzlagers 26 erhöht, übertrifft die Wandstärke "S₁" der Nabe 23 gemäß der Erfindung die Wandstärke "S₂" in den übrigen Abschnitten der Laufscheibe 21. Zur Abdichtung des zweireihig aufgebauten Wälzlagers 26 bildet die Nabe 23 einen freien überstehenden zylindrischen Abschnitt 29 der zur Aufnahme bzw. Befestigung beispielsweise eines Dichtrings 8 gemäß Figur 1 genutzt werden kann.

### Bezugszahlenliste

- 1: Laufscheibe
- 2: Mantelfläche
- 3: Nabe
- 4: Laufbahn
- 5: Wälzkörper
- 6: Wälzlager
- 7: Innenring
- 8: Dichtring
- 9: Abschnitt
- 10: Armierung
- 11: Schenkel
- 12: Dichtlippe
- 13: Gummierung
- 21: Laufscheibe
- 22: Mantelfläche
- 23: Nabe
- 24a: Laufbahn
- 24b: Laufbahn
- 25: Wälzkörper
- 26: Wälzlager
- 29: Abschnitt

## Patentansprüche

1. Laufscheibe für einen Zugmitteltrieb, ausgeführt als ein einteiliges Span-losteil, an dessen Mantelfläche (2, 22) ein Zugmittel geführt ist und dessen gleichzeitig einen Wälzlagerring bildende Nabe (3, 23) mit einem Wälzlager (6, 26) zusammenwirkt, wobei in die Nabe (3, 23) der C-förmig gestalteten Laufscheibe (1, 21) nach einem partiellen Härten zumindest eine Laufbahn (4, 24a, 24b) zur Aufnahme und Führung von Wälzkörpern (5, 25) eingeformt ist, wobei eine Wandstärke im Bereich der Nabe die Wandstärke aller übrigen Laufscheibenbereiche übertrifft.

2. Laufscheibe nach Anspruch 1, wobei die Nabe (3, 23) die Funktion eines Außenrings oder eines Innenrings des Wälzlagers (6, 26) übernimmt.

3. Laufscheibe nach Anspruch 1, die aus einem Stahlblech, spanlos durch ein Tiefziehverfahren hergestellt ist.

4. Laufscheibe nach Anspruch 1, zu deren Herstellung ein Fließpressverfahren vorgesehen ist.

5. Laufscheibe nach Anspruch 1, die ein Rollieren, Kaltwalzen, Schmieden oder Schleifen einschließt, zur Nachbehandlung der Laufbahn (4, 24a, 24b).

6. Laufscheibe nach Anspruch 1, wobei in die Nabe (23) zwei axial beabstandete Laufbahnen (24a, 24b) für die Wälzkörper (25) eingeformt sind.

7. Laufscheibe nach Anspruch 1, bei der ein freier zylindrischer Abschnitt (9, 29) der Nabe (3, 23) zur Aufnahme eines Dichtrings (8) bestimmt ist, mit dem das Wälzlager (6, 26) abgedichtet ist.

8. Laufscheibe nach Anspruch 9, wobei der Dichtring (8) mittels einer rechtwinklig abgekanteten Armierung (10) kraftschlüssig an den Abschnitt (9) der Nabe (3) befestigt ist.

9. Laufscheibe nach Anspruch 10, bei der die Armierung (10) des Dichtrings (8) über einen beschichteten Schenkel (11) an dem Abschnitt (9) der Nabe (3) abgestützt ist.

## Claims

1. Runner plate for a traction drive, designed as a one-piece non-cutting-machined part, on the surface area (2, 22) of which a traction means is guided and the hub (3, 23), forming a rolling bearing ring at the same time, of which cooperates with a rolling bearing (6, 26), in the hub (3, 23) of the runner plate (1, 21) of C-shaped configuration after partial hardening at least one raceway (4, 24a, 24b) for the reception and guidance of rolling bodies (5, 25) being shaped into the hub (3, 23) a wall thickness in the region of the hub exceeding the wall thickness of all the remaining runner plate regions.

2. Runner plate according to Claim 1, the hub (3, 23) assuming the function of an outer ring or of an inner ring of the rolling bearing (6, 26).

3. Runner plate according to Claim 1, which is produced from a sheet steel by non-cutting machining by means of a deep-drawing method.

4. Runner plate according to Claim 1, for the production of which an extrusion method is provided.

5. Runner plate according to Claim 1, which includes tumbling, cold-rolling, forging or grinding for the secondary treatment of the raceway (4, 24a, 24b).

6. Runner plate according to Claim 1, two axially spaced-apart raceways (24a, 24b) for the rolling bodies (25) being shaped into the hub (23).

7. Runner plate according to Claim 1, in which a free cylindrical portion (9, 29) of the hub (3, 23) is intended for receiving a sealing ring (8) by means of which the rolling bearing (6, 26) is sealed off.

8. Runner plate according to Claim 7, the sealing ring (8) being fastened non-positively to the portion (9) of the hub (3) by means of a reinforcement (10) bent at right angles.

9. Runner plate according to Claim 8, in which the reinforcement (10) of the sealing ring (8) is supported on the portion (9) of the hub (3) via a coated leg (11).

## Revendications

1. Disque mobile pour un entraînement à moyen de traction, réalisé sous forme d'une pièce fabriquée d'une seule pièce sans enlèvement de copeaux, sur la face d'enveloppe (2, 22) de laquelle est guidé un moyen de traction et dont le moyeu (3, 23) formant simultanément une bague de palier de roulement coopère avec un palier de roulement (6, 26), au moins une piste de roulement (4, 24a, 24b) étant formée dans le moyeu (3, 23) du disque mobile (1, 21) configuré avec une forme en C après un trempage partiel pour recevoir et guider des corps de roulement (5, 25), une épaisseur de paroi dépassant dans la région du moyeu l'épaisseur de paroi de toutes les autres régions du disque mobile.

2. Disque mobile selon la revendication 1, dans lequel le moyeu (3, 23) reprend la fonction d'une bague extérieure ou d'une bague intérieure du palier à roulement (6, 26).

3. Disque mobile selon la revendication 1, qui est fabriqué en tôle d'acier, sans enlèvement de copeaux par un procédé d'emboutissage profond.

4. Disque mobile selon la revendication 1, pour la fabrication duquel on prévoit un procédé d'extrusion.

5. Disque mobile selon la revendication 1, qui inclut un laminage, un laminage à froid, un forgeage ou un meulage, pour le post-traitement de la piste de roulement (4, 24a, 24b).

6. Disque mobile selon la revendication 1, dans lequel deux pistes de roulement (24a, 24b) espacées axialement sont formées pour les corps de roulement (25).

7. Disque mobile selon la revendication 1, dans lequel une portion cylindrique libre (9, 29) du moyeu (3, 23) est prévue pour recevoir une bague d'étanchéité (8), avec laquelle le palier à roulement (6, 26) est étanché.

8. Disque mobile selon la revendication 7, dans lequel la bague d'étanchéité (8) est fixée au moyen d'une armature (10) coudée à angle droit par engagement par force sur la portion (9) du moyeu (3).

9. Disque mobile selon la revendication 8, dans lequel l'armature (10) de la bague d'étanchéité (8) est supportée par le biais d'une branche revêtue (11) sur la portion (9) du moyeu (3).
